# EUROPÄISCHE PATENTSCHRIFT

(11) **EP 2 661 354 B1**
(45) Veröffentlichungstag und Bekanntmachung des Hinweises auf die Patenterteilung: **31.08.2016**
(21) Anmeldenummer: 11818977.8
(22) Anmeldetag: 14.10.2011
(51) Int. Cl.: B29C 67/00

(54) **VERFAHREN ZUM AUFBAUEN EINES SCHICHTENKÖRPERS MIT WENIGSTENS EINEM DAS BAUFELD BEGRENZENDEN UND HINSICHTLICH SEINER LAGE EINSTELLBAREN KÖRPER**
METHOD FOR CONSTRUCTING A LAMINAR BODY COMPRISING AT LEAST ONE POSITION-ADJUSTABLE BODY DEFINING THE WORKING AREA
PROCÉDÉ DE CONSTRUCTION D'UN CORPS STRATIFIÉ QUI COMPORTE AU MOINS UN CORPS DÉLIMITANT LA ZONE DE CONSTRUCTION ET DONT LA POSITION PEUT ÊTRE RÉGLÉE

(30) Priorität: 05.01.2011 DE 102011007957
(43) Veröffentlichungstag der Anmeldung: 13.11.2013
(73) Patentinhaber: Voxeljet AG, 86316 Friedberg (DE)
(72) Erfinder: HARTMANN, Andreas, 86391 Stadtbergen (DE); SCHMID, Dominik, 86165 Augsburg (DE)
(74) Vertreter: Wiedemann, Markus
(86) Internationale Anmeldenummer: PCT/DE2011/001850
(87) Internationale Veröffentlichungsnummer: WO 2012/092912

(56) Entgegenhaltungen:
- EP-A1- 1 872 928
- WO-A1-2008/049384
- WO-A2-2011/067352
- WO-A2-2011/127900

## Beschreibung

### Stand der Technik

Die Erfindung betrifft ein Verfahren zum Aufbauen eines Schichtenkörpers aus einer Mehrzahl von auf einer Bauplattform innerhalb eines Baufelds übereinanderliegenden Schichten aus fließfähigem Material, gemäß dem Oberbegriff von Patentanspruch 1.

In der EP 0 431 924 B1 wird ein computergesteuertes Verfahren zur Herstellung dreidimensionaler Formkörper beschrieben. Dabei wird fleißfähiges Partikelmaterial in einer dünnen Schicht auf ein gegebenenfalls von Behälterwänden umfasstes und auf einer Bauplattform angeordnetes Baufeld aufgetragen und dieses anschließend gemäß Computerdaten selektiv mittels eines Druckkopfes mit einem Bindemittel bedruckt. Der mit dem Bindemittel bedruckte Partikelbereich verklebt und verfestigt sich unter dem Einfluss des Binders und gegebenenfalls eines zusätzlichen Härters. Anschließend wir die Bauplattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt bis die erwünschte Höhe des Formkörpers erreicht ist. Aus den bedruckten und verfestigten Bereichen entsteht so ein dreidimensionales Objekt.

Der aus verfestigtem Partikelmaterial hergestellte Formkörper ist nach seiner Fertigstellung in losem Partikelmaterial eingebettet und wird anschließend davon befreit. Dies erfolgt beispielsweise mittels eines Saugers. Danach bleibt der gewünschte Formkörper übrig, die von anhaftenden Restpartikeln beispielsweise durch Abbürsten befreit wird.

In identischer bzw. ähnlicher Weise arbeiten auch andere Pulvergestützte Rapid-Prototyping-Prozesse, wie z.B. selektives Lasersintern oder Elektron-Beam-Sintern, bei denen ebenso loses Partikelmaterial schichtweise ausgebracht und mit Hilfe einer gesteuerten physikalischen Strahlungsquelle selektiv verfestigt wird. Die oben genannten Verfahren werden unter dem Begriff "dreidimensionale Druckverfahren" oder "3D-Druckverfahren" zusammengefasst.

Die Bereitstellung eines Baubehälters bzw. Bauzylinders mit einer darin in vertikaler Richtung absenkbaren Bauplattform erfordert jedoch einen hohen technischen Aufwand bei der Abdichtung der Baubehälterwand gegen die Bauplattform, um das Partikelmaterial vor dem unkontrollierten Abfließen durch den Spalt zwischen der Bauplattform und der Baubehälterwand zu hindern. Ein weiterer Nachteil einer absenkbaren Bauplattform liegt in der stetigen Zunahme des zu bewegenden Gewichts auf der Bauplattform mit fortschreitendem Bauprozess. Insbesondere kann es beim Auftragen einer weiteren Schicht erforderlich sein, dass die Bauplattform um etwas mehr als eine Schichtdicke abgesenkt und dann wieder auf das erforderliche Maß angehoben wird, um die Schichtdicke hinreichend genau einstellen zu können. Bei einem solchen reversierenden Betrieb müssen nicht nur das gesamte Gewicht der Pulverschüttung einschließlich Bauplattform sondern auch die Reibungskräfte zwischen dem Pulverbett und der Baubehälterwandung überwunden werden. Dies führt insbesondere bei großen Baufeldern und hohen Schüttdichten zu hohen Belastungen der Führungen und Antriebe einer vertikal beweglichen Bauplattform.

Demgegenüber wird in der gattungsgemäßen EP 1 872 928 A1 vorgeschlagen, zum Bauen größerer dreidimensionaler Formkörper mit fortschreitendem Schichtauftrag nicht die Bauplattform relativ zur Austragvorrichtung und zum Druckkopf abzusenken, sondern stattdessen die Austragvorrichtung und den Druckkopf relativ zur Bauplattform anzuheben. In dieser Schrift wird weiterhin vorgeschlagen, durch Verfestigung der Randbereiche aufgetragenen Partikelmaterials feste Wände aus Partikelmaterial aufzubauen, aus welchen dann ein das Baufeld begrenzender Baubehälter gebildet wird, in dessen Innenraum Formkörper selektiver Größe und Gestalt aufgebaut werden können. Alternativ wird vorgeschlagen, Formkörper auf dem Baufeld freistehend und ohne Verwendung eines Baubehälters zur Einfassung und Abstützung bereits aufgetragener Schichten aufzubauen. Hierzu wird die Austragvorrichtung als Dosiervorrichtung ausgestaltet, die zur gesteuerten Ausgabe eines vorbestimmten, vorzugsweise konstanten linienförmigen Volumenstroms von Partikelmaterial pro Längeneinheit und pro Zeiteinheit gesteuert einund ausschaltbar ist, um nicht unnötig Partikelmaterial um den zu bauenden Formkörper herum abzuwerfen bzw. vorzeitig "leer" zu laufen und damit während der Schichtablage ihre Funktion zu verlieren. Solche dosiergesteuerten und "intelligenten" Austragvorrichtungen sind jedoch relativ aufwändig in ihrem Aufbau und entsprechend teuer.

Einfacher gestaltete "unintelligente" Austragvorrichtungen können dagegen nicht gezielt Partikelmaterial dosieren bzw. sind nicht schaltbar. Sie beinhalten beispielsweise ein in Austragrichtung bewegtes Rakel oder eine gegenläufig rotierende Walze oder eine schwingende Klinge. Diese Vorrichtungen verteilen dann eine vor der Austragvorrichtung befindliche Materialmenge in Austragrichtung auf dem Baufeld. Die Menge an Partikelmaterial muss dann vor der Fahrt der Austragvorrichtung über das Baufeld ausreichend bemessen werden.

Andere Bauformen können eine Materialmenge in zwei Richtungen über die zu beschichtende Fläche führen. Dazu zählen Austragvorrichtungen, die aus einem einfachen länglichen Trichter mit einem Schlitz an der Unterseite als Austragsöffnung zur Abgabe von Partikelmaterial bestehen. Bei einer weiteren Ausführungsform ist z.B. zumindest eine der beiden Trichterwände durch eine gegenläufige Walze ersetzt.

Damit der Prozess wie beschrieben ablaufen kann, muss der zu beschichtende Bereich von der Austragvorrichtung vollständig überstrichen werden. Eine Austragvorrichtung nach vorgenannter einfacher und "unintelligenter" Bauform verliert allerdings eine restliche Materialmenge, die sich vor der Austragvorrichtung in Austragrichtung befindet, sobald die Baufeldkante erreicht ist. Diese Materialmenge wäre dann für den weiteren Bauprozess verloren. Wünschenswert wäre allerdings eine Rückführung dieses verlorenen Materials in die Austragvorrichtung für den weiteren Schichtaufbau.

Eine Möglichkeit zur weitgehenden Vermeidung verlorenen Materials ist aus z.B. aus der US 2005/0280185 A bekannt. Dort wird die Partikelmenge in der Austragvorrichtung mittels einer Sensorik vorbestimmt. Die Austragvorrichtung führt eine vorbestimmte Materialmenge mit sich, die ausreichend ist, um die gewünschte Fläche zu beschichten und nicht all zuviel Abfallpartikel nach Überstreichen der Baufeldkante zu produzieren. In diesem Fall muss jedoch die Mengenbestimmung sehr genau erfolgen, um eine zu geringe Dosierung in jedem Fall zu vermeiden, welche einen ungenügenden Schichtauftrag zur Folge hätte. Als weiterer Nachteil dieses Verfahrens erweist sich die kontinuierliche Abnahme der Materialmenge in der Austragvorrichtung während der Fahrt, die dazu führt, dass der Beschichtungsprozess instationär erfolgt. Dadurch kann es vorkommen, dass die Schüttdichte am Beginn der Fahrt der Austragvorrichtung aufgrund des höheren Materialgewichts höher ist als am Ende der Fahrt, wenn nur noch eine Restmenge in der Austragvorrichtung verblieben ist.

Die WO 2008/049384 A1 offenbart eine Vorrichtung zum Herstellen eines dreidimensionalen Objekts durch aufeinanderfolgendes Verfestigen von Schichten eines mittels elektromagnetischer Strahlung verfestigbaren Aufbaumaterials an den dem jeweiligen Querschnitt des Objekts entsprechenden Stellen, mit einer in einem Bauraum angeordneten Tragvorrichtung zum Tragen des Objekts mit einem Träger mit einer dem Objekt zugewandten Oberseite, einer den Träger umgreifenden Wandung zur randseitigen Begrenzung des Baumaterials, einer Aufbringvorrichtung zum Aufbringen von Schichten des Aufbaumaterials auf die Tragvorrichtung oder eine zuvor gebildete Schicht und eine Bestrahlungsvorrichtung zum Bestrahlen von Schichten des Aufbaumaterials an den dem jeweiligen Querschnitt des Objekts entsprechenden Stellen, wobei der Träger der Tragvorrichtung während des Bauvorgangs höhenfest angeordnet ist und die Wandung mittels einer programmgesteuerten Verstelleinrichtung höhenverstellbar gelagert ist.

Die Aufgabe der Erfindung besteht darin, ein Verfahren der eingangs erwähnten Art derart weiter zu bilden, dass es einerseits Beschichtungsmaterial einspart und andererseits von einer relativ einfachen, nicht schaltbaren Vorrichtung ausgeführt werden kann.

Die Erfindung basiert auf dem Gedanken, dass durch die Austragsöffnung einer nicht schaltbaren Austragvorrichtung, d.h. einer "unintelligenten" Austragvorrichtung ohne Möglichkeit, den Materialfluss durch die Austragsöffnung ein- bzw. auszuschalten, kein fließfähiges Material bzw. Partikelmaterial mehr ausfließen bzw. ausgetragen werden kann, wenn die Austragsöffnung von einem sich auf entsprechendem Niveau befindlichen Körper verschlossen wird, den die Austragsvorrichtung überfährt.

Ein solcher Körper simuliert dann eine bereits ausgetragene Schicht von fließfähigem Material, welche ein weiteres Ausbringen von Material verhindert, wenn diese Schicht genau das Niveau der Austragsöffnung der Austragvorrichtung hat. Denn in diesem Fall wird die Austragsöffnung von der bereits ausgetragenen Schicht verschlossen.

Indem der Körper bzw. die Bauplattform ausgebildet wird, zumindest die vertikale Lage des Körpers in Bezug zur Bauplattform verändern zu können, kann die Größe des Baufelds durch den Körper auf einfache Weise begrenzt werden, ohne dass hierfür ein an die jeweilige Größe des Baufelds aufwändig angepasster Baubehälter notwendig wäre. Wenn die Austragvorrichtung mit ihrer Austragsöffnung auf die Oberfläche des am Rand des Baufelds und in vertikaler Richtung geeignet platzieren Körpers aufläuft, verschließt dieser die Austragsöffnung, wodurch am Rand des Baufelds kein fließfähiges Material mehr ausgebracht werden kann.

Alternativ oder zusätzlich ist der Körper ausgebildet, dass er die Austragsöffnung nicht verschließt, sondern er weist Mittel wie beispielsweise eine beispielsweise steuerbar zu öffnende bzw. zu verschließende Öffnung auf, um für den Schichtaufbau nicht verbrauchtes fließfähiges Material von der Austragsöffnung in einen Auffangbehälter auszutragen bzw. zu leiten, um es dem Schichtprozess wieder zuführen zu können.

Erfindungsgemäß wird daher vorgeschlagen, dass wenigstens ein das Baufeld in wenigstens einer Austragrichtung der Austragvorrichtung begrenzender Körper und die Bauplattform gemäß dem jeweiligen Baufortschritt des Schichtenkörpers in vertikaler Richtung relativ zueinander derart verstellbar sind bzw. relativ zueinander verstellt werden, dass eine zur Austragsöffnung weisende Oberfläche des Körpers mit einer noch herzustellenden oder bereits hergestellten obersten Schicht des Schichtenkörpers bündig ausgerichtet ist, um die Austragsöffnung der Austragvorrichtung zu verschließen und diese am Austragen von fließfähigem Material zu hindern oder um für den Schichtaufbau nicht verbrauchtes fließfähiges Material in einen Auffangbehälter auszutragen, wenn sich die Austragsöffnung über dem Körper befindet.

Vorteilhaft dabei ist, dass es dann mit einem "unintelligenten", nicht schaltbaren, nicht dosierenden und lediglich weggesteuerten Austragvorrichtung möglich ist, fließfähiges Material nur innerhalb des vom Körper begrenzten Baufelds auszutragen und insbesondere ein Austragen auf außerhalb des Baufelds befindlichen Bereich auf der Bauplattform zu vermeiden. Dadurch kann ein Entfernen von außerhalb des Baufelds befindlichem Restmaterial entfallen, was sich günstig auf die Kosten auswirkt. Zur Kostenersparnis trägt auch die Möglichkeit bei, mit der Erfindung eine "unintelligente", nicht schaltbare, nicht dosierende und lediglich weggesteuerte Austragvorrichtung zu verwenden, weil eine solche wesentlich kostengünstiger ist als eine "intelligente" Austragvorrichtung. Unter einer lediglich weggesteuerten und "unintelligenten" Austragvorrichtung soll eine Austragvorrichtung verstanden werden, welche computergesteuert eine bestimmte Austragstrecke, beispielsweise von einer Ausgangsposition zu einer Reversierposition abfährt und entlang dieser Austragstrecke durch die stets geöffnete Austragöffnung fließfähiges Material auf das Baufeld austrägt bzw. ausfließen lässt. Es sind seitens der Austragvorrichtung insbesondere keine Mittel vorhanden, die Austragsöffnung zu verschließen oder die auszubringende Menge an fließfähigem Material abhängig vom Verfahrweg etwa dosieren zu können.

Von besonderem Vorteil ist, wenn der wenigstens eine Körper zur variablen Begrenzung des Baufelds innerhalb einer horizontalen Ebene parallel zur Bauplattform verstellbar ausgebildet ist. Dann ist das Baufeld durch den wenigstens einen Körper in seiner flächigen Ausdehnung begrenzbar, insbesondere dann, wenn ein Körper in einer Austragsrichtung der Austragvorrichtung (z.B. X-Richtung) und ein weiterer Körper in einer hierzu senkrechten Austragrichtung (z.B. Y-Richtung) angeordnet werden, um ein in beiden Richtungen begrenztes Baufeld zu erzielen. Damit wird gewährleistet, dass in beiden Richtungen kein Austrag von fließfähigem Material über die Ränder des Baufelds hinweg mehr stattfindet.

Wie oben bereits erwähnt, ist die Austragvorrichtung bevorzugt eine "unintelligente" Austragvorrichtung und hinsichtlich einer vorgegebenen, sich von einer Ausgangsposition an einem Rand des Baufelds bis zu einer Reversierposition am gegenüberliegenden Rand des Baufelds erstreckenden Austragstrecke lediglich weggesteuert. Dies spart weiterhin Kosten.

Dabei kann die Reversierposition durch die jeweilige Lage des wenigstens einen Körpers vorgegeben werden und die Ausgangsposition ist stationär. In diesem Fall wird der Beschichtungsvorgang von einer stationären Ausgangsposition gestartet und die Reversierposition abhängig von der Lage des wenigstens einen Körpers in der horizontalen Ebene festgelegt.

Umgekehrt kann aber auch die Ausgangsposition durch die jeweilige Lage des wenigstens einen Körpers vorgegeben werden und die Reversierposition ist stationär. In diesem Fall wird der Beschichtungsvorgang von dem wenigstens einen Körper aus gestartet und an der stationären Reversierposition in seiner Richtung umgekehrt. In beiden Fällen hängt die Länge der von der Austragvorrichtung zurückzulegenden Austragstrecke und damit die Ausdehnung des Baufelds in dieser Richtung von der Lage des wenigstens einen Körpers ab.

Besonders bevorzugt ist die Ausgangsposition der Austragvorrichtung, d.h. der Ort, von welchem aus der Austragvorgang gestartet wird, eine Befüllposition, an welcher die Austragvorrichtung mittels einer Befüllvorrichtung mit fließfähigem Material befüllbar oder nachfüllbar ist. Je nachdem, ob die Ausgangsposition von der Lage des wenigstens einen Körpers abhängt oder nicht, ist daher auch die Lage der Befüllvorrichtung in einer horizontalen Ebene parallel zur Bauplattform von der Lage des Körpers abhängig. Die Befüllvorrichtung wird dann beispielsweise über der Austragvorrichtung positioniert.

Der Auffangbehälter für überschüssiges fließfähiges Material ist beispielsweise an der Reversierposition oder an der Ausgangsposition angeordnet. Dann kann ein Körper an der Ausgangsposition und wenigstens ein anderer Körper an der Reversierposition angeordnet sein, wobei in dem einen Körper oder in dem anderen Körper Mittel vorgesehen sind, um fließfähiges Material in den Auffangbehälter einzubringen oder in diesen zu leiten. Der eine die Austragöffnung der Austragvorrichtung verschließende Körper dient dann dazu, einen Austrag von fließfähigem Material am Rand des Baufelds zu verhindern, während der Zweck des anderen Körpers am gegenüberliegenden Rand des Baufelds ist, überschüssiges, d.h. nicht verbrauchtes fließfähiges Material in den Auffangbehälter einzubringen, um es einer erneuten Verwendung zum Schichtaufbau zuzuführen.

Der wenigstens eine Körper ist bevorzugt ein flächiger plattenförmiger Körper, beispielsweise ein Blech mit oder ohne Durchgangsöffnung, je nachdem ob er einen Austrag aus der Austragsöffnung der Austragvorrichtung verhindern oder einen Austrag in den Auffangbehälter bewirken soll.

Besonders bevorzugt sind daher in vertikaler Richtung die Bauplattform relativ zu dem Körper und der Austragvorrichtung und in horizontaler Richtung der Körper und die Austragvorrichtung relativ zur Bauplattform verstellbar ausgebildet, um das Baufeld flexibel an die jeweiligen Erfordernisse und insbesondere an den jeweils zu bauenden Formkörper bei geringst möglichen Verlusten an fließfähigem Material anzupassen.

Die Erfindung betrifft daher Verfahren zum Aufbauen eines Schichtenkörpers aus einer Mehrzahl von auf einer Bauplattform innerhalb eines Baufelds übereinanderliegenden Schichten aus fließfähigem Material.

Weitere die Erfindung verbessernde Maßnahmen werden nachstehend gemeinsam mit der Beschreibung von Ausführungsbeispielen anhand der Zeichnung näher dargestellt.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine Draufsicht auf eine Vorrichtung zur Herstellung von Formkörpern mit verschiedenen Baufeldgrößen auf einer Bauplattform;
- Fig.2a bis 2d: eine schematische Querschnittsansicht einer Vorrichtung zur Herstellung von Formkörpern;
- Fig.3a bis 3g: eine schematische Querschnittsansicht einer weiteren Ausführungsform;

### Beschreibung der Ausführungsbeispiele

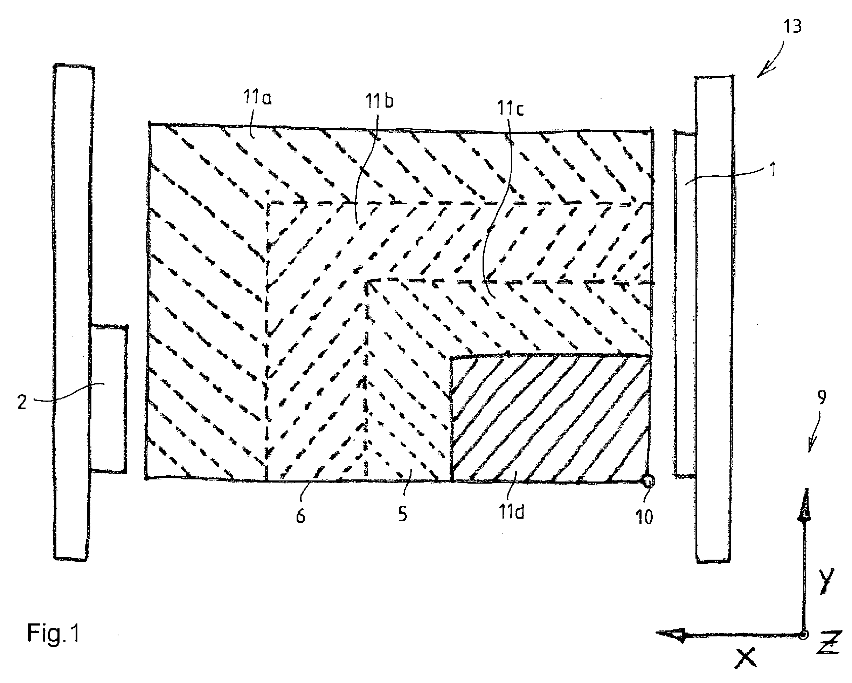

Eine bevorzugte Ausführungsform einer Vorrichtung 13 zum Aufbauen eines Schichtenkörpers 5 aus einer Mehrzahl von auf einer Bauplattform 6 innerhalb eines Baufelds 11a bis 11d übereinanderliegenden Schichten aus beispielsweise pulverförmigem, zunächst losem Partikelmaterial ist in Fig.1 gezeigt. Die in Fig.1 gezeigten Baufelder 11a bis 11d verschiedener Größe erstrecken sich flächig in Fig.1 in horizontaler X- und Y-Richtung parallel zur Bauplattform 6, wobei der Schichtenkörper 5 in vertikaler Z-Richtung aufgebaut wird, welche senkrecht zur Zeichenebene von Fig.1 ist.

Die Vorrichtung 13 umfasst eine über dem Baufeld 11a bis 11d in wenigstens einer Austragrichtung, hier beispielsweise in X-Richtung und/oder Y-Richtung hin und her bewegbare Austragvorrichtung 1 mit wenigstens einer in dieser Ansicht nicht sichtbaren Austragsöffnung 14, aus welcher während der Bewegung der Austragvorrichtung 1 das Partikelmaterial in einzelnen übereinander liegenden Schichten austragbar ist.

Die Austragvorrichtung 1 ist bevorzugt eine nicht schaltbare Austragvorrichtung, d.h. ohne Möglichkeit, den Materialfluss durch die Austragsöffnung 14 ein- bzw. auszuschalten, damit fließfähiges Material bzw. Partikelmaterial ausfließen bzw. nicht ausfließen kann. Vielmehr fließt bei der Austragvorrichtung 1 stets Partikelmaterial durch die Austragsöffnung 14, wenn diese nicht durch nicht zur Austragvorrichtung 1 gehörende Mittel verschlossen wird oder wenn sich kein Partikelmaterial (mehr) in einem Vorrat der Austragvorrichtung 1 befindet.

Weiterhin umfasst die Vorrichtung 13 einen über dem Baufeld 11 beispielsweise in X- und Y-Richtung hin und her bewegbaren Druckkopf 2 zum selektiven Auftragen von Bindemittel auf wenigstens eine ausgetragene Schicht, um in örtlich vorbestimmten Bereichen des Baufelds 11a bis 11d ausgetragene Schichten durch Einwirkung von Bindemittel zu verfestigen und miteinander zu verbinden, so dass von den verfestigten und verbundenen Bereichen der Schichten des Schichtkörpers 5 in bekannter Weise wenigstens ein Formkörper 4 gebildet wird.

Alternativ hierzu könnte der Druckkopf 2 durch eine Strahlungsquelle ersetzt werden, wenn in dem ausgetragenen fließfähigen Material bereits ein Bindemittel vorhanden ist, welches dann durch selektive Bestrahlung mittels der Strahlungsquelle aushärtet, um den Formkörper 4 auszubilden. Oder das fließfähige Material wird selbst durch die Bestrahlung auf- oder angeschmolzen und verbindet sich dabei.

Die Ausdehnung des Baufelds 11a bis 11d in X-und Y-Richtung wird durch den Materialauftrag auf der Bauplattform 6 vorgegeben, wobei in Fig.1 verschiedene Größen von Baufeldern 11a bis 11d dargestellt sind. Beschreibt man das Baufeld 11a bis 11d in dem gezeigten orthogonalen Koordinatensystem 9, lässt sich ausgehend vom Ursprung 10 jede Ausdehnung oder Größe von Baufeldern 11a bis 11d als Rechteck darstellen. Die Abmessungen der Bauplattform 6 in X- und Y-Richtung entsprechen dann einer maximal darstellbaren Größe eines Baufeld 11a.

Generell wird die eine Rechteckseite eines solchen Baufelds 11 beispielsweise durch die Austragstrecke oder den Austragweg der Austragvorrichtung 1 in Austragrichtung X bestimmt, so dass im vorliegenden Fall die Baufeldgröße von der Länge dieser Austragstrecke abhängt. So steigt beim Beispiel von Fig.1 die Austragstrecke der Austragvorrichtung 1 in X-Richtung von 11d bis 11a an.

Die andere Rechteckseite eines Baufelds 11a bis 11d wird beispielsweise durch die Breite der Austragsöffnung 14 der Austragvorrichtung 1 in Y-Richtung bestimmt, welche insbesondere durch einen länglichen Schlitz gebildet werden kann. Im vorliegenden Fall sind unterschiedliche Längen von Austragsöffnungen 14 der Austragvorrichtung 1 vorgesehen, um die unterschiedlichen langen Rechteckseite der Baufelder 11a bis 11d in Y-Richtung zu erhalten. Insgesamt kann daher im vorliegenden Fall mit einmaligem Zurücklegen der Austragstrecke in X-Richtung eine Schicht des Schichtenkörpers 5 komplett fertig gestellt werden.

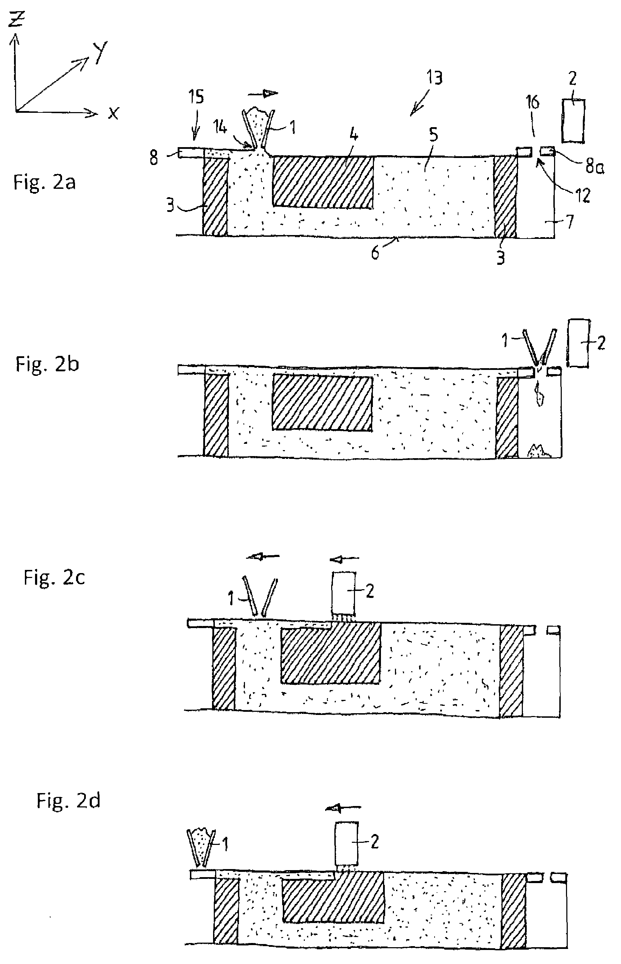

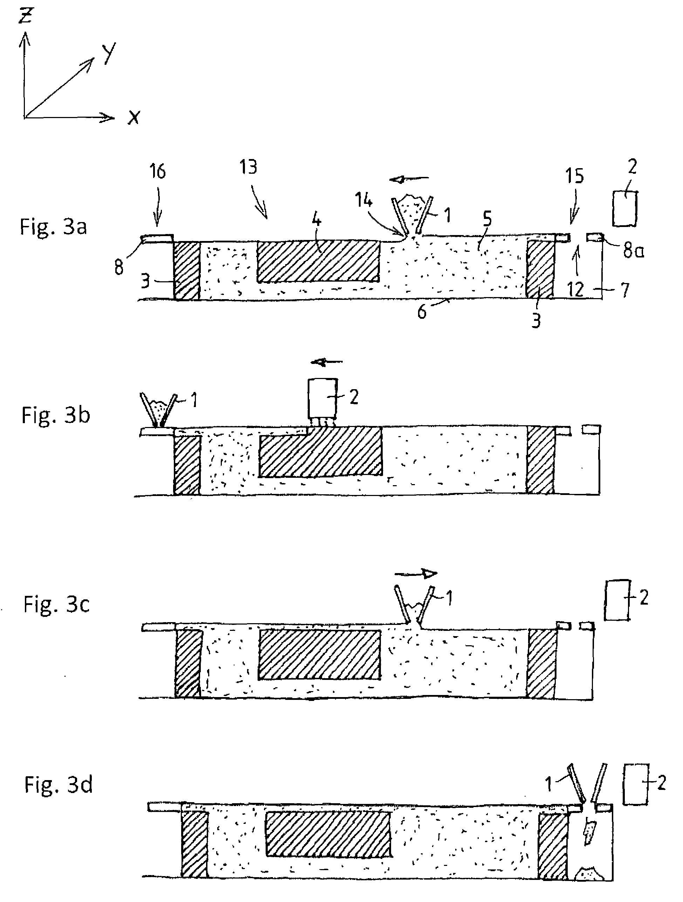

In den seitlichen Querschnittsdarstellung von Fig.2a bis 2d bzw. 3a bis 3g sind von einem Baufeld 11 jeweils nur eine Rechteckseite erkennbar. Dort werden die Ränder des Baufelds 11 in X- und Y-Richtung bevorzugt durch gedruckte Wandungen 3 gebildet, d.h. dass das Partikelmaterial dort durch den Druckkopf 2 gezielt verfestigt wird, damit innerhalb der Ränder des Baufelds 11 befindliches loses Partikelmaterial des Schichtenkörpers 5 nicht in Bereiche außerhalb des Baufelds 11 abfließen kann. Hierzu bedruckt der Druckkopf 2 die Randbereiche jeder ausgebrachten Schicht in geeigneter Weise. Alternativ könnte aber auch ein separater Baubehälter bzw. separate Bauwände zur Begrenzung des Baufelds 11 eingesetzt werden.

Bei den dort gezeigten Ausführungsformen wird mit fortschreitender Höhe des Schichtenkörpers 5 in Z-Richtung bevorzugt die Bauplattform 6 abgesenkt, insbesondere mittels nicht dargestellter Antriebe und Führungen. Deshalb verbleibt für jede neu auszubringende Schicht die Austragvorrichtung 1 auf ihrem anfänglichen Niveau und ist deshalb beispielsweise lediglich in X-Richtung und/oder Y-Richtung relativ zur Bauplattform 6 verfahrbar. Alternativ könnte die Bauplattform 6 stationär angeordnet sein und wenigstens die Austragvorrichtung 1 sowohl in X-, Y- als auch in Z-Richtung relativ zur stationären Bauplattform 6 verfahrbar ausgebildet sein.

Bei den Ausführungsformen von Fig.2a bis 2d bzw. Fig.3a bis 3g ist die Bauplattform 6 relativ zu beispielsweise zwei das Baufeld in Austragrichtung X der Austragvorrichtung begrenzenden Körpern 8, 8a gemäß dem jeweiligen Baufortschritt des Schichtenkörpers 5 in vertikaler Richtung derart verstellbar, dass zur Austragsöffnung 14 der Austragvorrichtung 1 weisende Oberflächen der Körper 8, 8a mit einer noch herzustellenden oder bereits hergestellten obersten Schicht des Schichtenkörpers 5 bündig ausgerichtet sind. Der Zweck der beiden Körper 8, 8a besteht darin, die Austragsöffnung 14 der Austragvorrichtung 1 zu verschließen und diese am Austragen von fließfähigem Material zu hindern (Körper 8) bzw. um für den Schichtenaufbau nicht verbrauchtes fließfähiges Material in einen Auffangbehälter 7 auszutragen (Körper 8a), wenn sich die Austragsöffnung 14 der Austragvorrichtung 1 über dem jeweiligen Körper 8, 8a befindet.

Wenigstens einer der Körper 8, 8a, hier bevorzugt der Körper 8 ist zur variablen Begrenzung des Baufelds 11 innerhalb einer horizontalen Ebene parallel zur Bauplattform 6 und insbesondere in X-Richtung verstellbar ausgebildet. Dann ist das Baufeld 11 durch den Körper 8 in seiner flächigen Ausdehnung zumindest in X-Richtung begrenzt, insbesondere dann, wenn die Position des Körpers 8 in Austragrichtung X der Austragvorrichtung 1 verstellbar ausgebildet wird.

Besonders bevorzugt sind daher in vertikaler Z-Richtung die Bauplattform 6 relativ zu den Körpern 8, 8a, der Austragvorrichtung 1 und dem Druckkopf 2 und in horizontaler X-Richtung der Körper 8, die Austragvorrichtung 1 und der Druckkopf 2 relativ zur Bauplattform 6 verstellbar ausgebildet. Die Lage des Körpers 8 wird in X-Richtung verstellt, um das Baufeld 11 flexibel an die jeweiligen Erfordernisse und insbesondere an den oder die zu bauenden Formkörper 4 bei geringst möglichen Verlusten an fließfähigem Material anzupassen. Die beiden Körper 8, 8a befinden folglich stets auf dem gleichen Niveau in Z-Richtung, insbesondere durch Befestigung bzw. Führung an einem hier nicht gezeigten stationären Rahmen der Vorrichtung 13, während die Bauplattform 6 mit fortschreitendem Baufortschritt des Schichtenkörpers 5 abgesenkt wird.

Die Körper 8, 8a sind bevorzugt flächige plattenförmige Körper, beispielsweise Bleche mit und ohne Durchgangsöffnung 12, je nachdem ob der betreffende Körper 8 bzw. 8a einen Austrag aus der Austragsöffnung 14 der Austragvorrichtung 1 verhindern oder einen Austrag in den Auffangbehälter 7 ermöglichen bzw. bewirken soll. Der Körper 8a wird daher bevorzugt durch ein Lochblech mit wenigstens einer Durchgangsöffnung 12 gebildet. Weiterhin kann der Körper 8a auch Mittel zum Leiten von Partikelmaterial in den Auffangbehälter 7 umfassen. Nicht zuletzt kann wenigstens eine Durchgangsöffnung 12 des Körpers 8a steuerbar sein, d.h. abhängig von externen elektrischen, pneumatischen und/oder mechanischen Steuersignalen kann die wenigstens eine Durchgangsöffnung 12 geöffnet oder verschlossen werden, um für den Schichtaufbau nicht verbrauchtes fließfähiges Material von der Austragsöffnung 14 in den Auffangbehälter 7 auszutragen bzw. zu leiten, um es dem Schichtprozess wieder zuführen zu können.

Wie bereits oben angedeutet, wird die Austragvorrichtung 1 hinsichtlich einer vorgegebenen, sich von einer Ausgangs-, Start- oder Ruheposition 15 an einem Rand des Baufelds 11 bis zu einer Reversierposition 16 am gegenüberliegenden Rand des Baufelds 11 erstreckenden Austragstrecke in X-Richtung beispielsweise von einem hier nicht gezeigten elektronischen Steuergerät weggesteuert, d.h. auf einen Startbefehl hin bewegt sie sich von ihrer Ausgangs- oder Ruheposition 15 aus in X-Richtung zunächst bis zur Reversierposition 16, an welcher die Bewegungsrichtung, gegebenenfalls nach Ablauf einer gewissen Verweilzeit an der Reversierposition 16 automatisch umgekehrt wird. Während der Bewegung der Austragvorrichtung 1 entlang der Austragstrecke, welche dann zugleich die Länge der hier sichtbaren Rechteckseite des Baufelds 11 bildet, wird dann über die Austragsöffnung 14 bevorzugt kontinuierlich Partikelmaterial auf die Bauplattform 6 bzw. auf einen bereits aufgeschichteten Teil des Schichtenkörpers 5 aufgetragen.

Zuvor wird die Austragvorrichtung 1, hier beispielsweise ein Austragtrichter von einer hier nicht gezeigten, aber leicht vorstellbaren Befüllvorrichtung vorzugsweise mit einer Menge an Partikelmaterial befüllt, welche einem Vielfachen von aufzutragenden Schichten entspricht.

Gemäß der Ausführungsform von Fig.2a bis 2d ist die Ausgangsposition 15 durch die Lage des in X-Richtung verstellbaren Körpers 8 vorgegeben, aber die Reversierposition 16, an welcher sich der Körper 8a befindet, ist stationär. In diesem Fall wird der Beschichtungsvorgang von der jeweils eingestellten Lage des Körpers 8 aus gestartet, wobei genau an der Ausgangsposition 15 der Körper 8 die Austragsöffnung 14 der Austragvorrichtung 1 verschließt und verhindert, dass Partikelmaterial ausgebracht wird, wie anhand von Fig.2a leicht vorstellbar ist. Erst wenn sich die Austragsvorrichtung 1 ein Stück weit vom Körper 8 entfernt hat, ist unterhalb der Austragsöffnung 14 ein schichthoher bzw. schichtdicker freier Raum vorhanden, in welchen Partikelmaterial zur Ausbildung genau einer Schicht ausgetragen werden kann. Im Einzelnen werden bei der Ausführungsform von Fig.2a bis 2d folgende Verfahrensschritte durchgeführt: Zunächst wird die Bauplattform 6 in vertikaler Richtung relativ zum den Körpern 8 und 8a, zur Austragvorrichtung 1 und zum Druckkopf 2 derart positioniert, dass die zur Austragsöffnung 14 weisenden Oberflächen der Körper 8, 8a, die Austragsöffnung 14 der Austragvorrichtung 1 und der Druckkopf 2 um eine Schichtdicke höher als die aktuell oberste Schicht des Schichtenkörpers 5 angeordnet sind.

Wenn sich die Austragvorrichtung 1 in ihrer Ausgangsposition genau über dem Körper 8 befindet, wird deren Austragsöffnung 14 durch den Körper 8 verschlossen, wie anhand von Fig.2a leicht vorstellbar ist. Der Druckkopf 2 befindet sich dann bevorzugt jenseits der gegenüberliegenden Reversierposition 16 der Austragvorrichtung 1, d.h. außerhalb des Baufelds 11, um eine spätere Kollision mit der an der Reversierposition 16 angelangten Austragvorrichtung 1 zu vermeiden.

Gleichzeitig oder danach wird die Austragvorrichtung 1 an der Ausgangsposition 15 mit fließfähigem Material in einer Menge befüllt, die ausreicht, um beispielsweise eine einzige Schicht des Schichtenkörpers 5 zu fertigen. Die hier nicht gezeigte Befüllvorrichtung ist dann beispielsweise über der Austragvorrichtung 1 positioniert.

Dann steuert das Steuergerät die Austragvorrichtung 1 an, ausgehend von der Ausgangsposition 15 bis zur Reversierposition 16 unter Austragen von Partikelmaterial zum Aufbau einer Schicht zu verfahren. Diese Situation ist in Fig.2a gezeigt.

Wenn dann die Austragvorrichtung 1 den Körper 8a an der Reversierposition 16 erreicht hat, befindet sich die Austragsöffnung 14 gerade über der geöffneten Durchgangsöffnung 12 des Körpers 8a, so dass eventuell noch in der Austragsvorrichtung 1 befindliches, hinsichtlich der Fertigung einer Schicht überschüssiges Partikelmaterial in den beispielsweise unterhalb der Durchgangsöffnung 12 des Körpers 8a angeordneten Auffangbehälter 7 abfließen kann. Danach steuert das Steuergerät die entleerte Austragvorrichtung 1 zurück in ihre Ausgangsposition 15, wobei ihr der Druckkopf 2 folgt, um einen örtlich vorbestimmten Bereich der ausgetragenen Schicht mit Bindemittel zu versehen bzw. zu bedrucken. Da die Austragvorrichtung 1 bei dieser Fahrt leer, dh. ohne Partikelmaterial bewegt wird, wird ein ungewolltes Auftragen von Partikelmaterial auf den Schichtenkörper 5 verhindert. Dieser Vorgang ist in Fig.2c gezeigt.

Wenn die Austragvorrichtung 1 die Ausgangsposition 15 erreicht hat, wird sie wiederum mit Partikelmaterial für eine Schicht befüllt und der beschrieben Zyklus beginnt von Neuem (Fig.2d). Der Zyklus gemäß Fig.2a bis 2d wird solange wiederholt, bis der Schichtenkörper 5 vollständig erstellt ist. Dabei werden auch die Bereiche vom Druckkopf 2 bedruckt, welche die Wände 3 des Schichtenkörpers 5 darstellen.

Bei der in Fig.3a bis 3g gezeigten Ausführungsform wird im Unterschied zur Ausführungsform von Fig.2a bis 2d die Reversierposition 16 durch die jeweils in X-Richtung eingestellte Lage des Körpers 8 bestimmt und die Ausgangsposition 15, an welcher sich der Körper 8a befindet, ist stationär. In diesem Fall wird der Beschichtungsvorgang von einer stationären Ausgangsposition 15 gestartet und die Reversierposition 16 abhängig von der Lage des Körpers 8 in X-Richtung festgelegt.

Im Einzelnen werden bei der Ausführungsform von Fig.3a bis 3g folgende Verfahrensschritte durchgeführt:
Zunächst wird die Bauplattform 6 in vertikaler Richtung (Z-Richtung) relativ zu den Körpern 8, 8a, zur Austragvorrichtung 1 und zum Druckkopf 2 derart positioniert, dass zum einen die zur Austragsöffnung 14 weisende Oberflächen der Körper 8, 8a und zum andern die Austragsöffnung 14 um eine Schichtdicke höher als die aktuell oberste Schicht des Schichtenkörpers 5 angeordnet sind. Der Körper 8a mit der wenigstens einen Durchgangsöffnung 12 und dem darunter liegenden Auffangbehälter 7 befindet sich an der Ausgangsposition 15 und der Körper 8 ohne eine solche Durchgangsöffnung 12 an der Reversierposition 16.

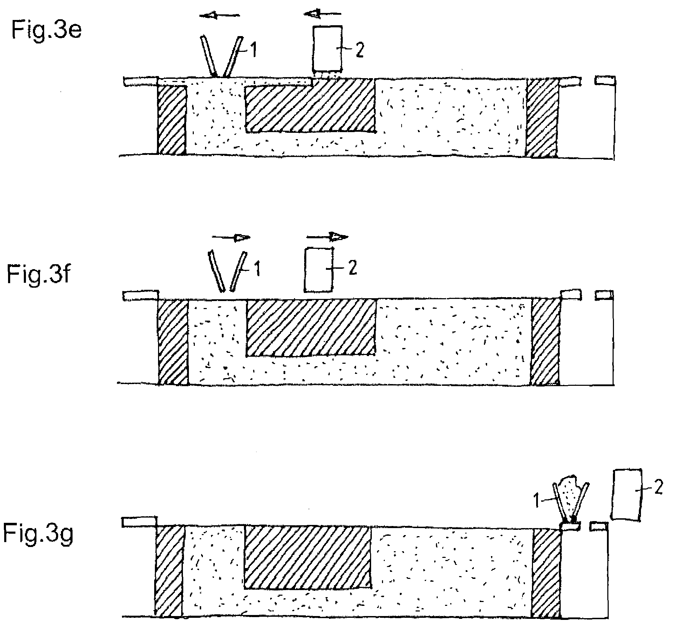

Damit kein Partikelmaterial durch die Durchgangsöffnung 12 des Körpers 8a in den Auffangbehälter 7 in der Ausgangsposition 15 abfließen kann, erfolgt das Befüllen der Austragvorrichtung 1 durch die hier nicht gezeigte Befüllvorrichtung beispielsweise in einer um ein kleines Stück von der Ausgangsposition 15 in X-Richtung entfernten Position, in welcher ein zum Baufeld 11 weisender Teil des Körpers 8a die Austragsöffnung 14 der Austragvorrichtung 1 verschließen kann, wie in Fig.3g gezeigt ist. Die die Austragvorrichtung 1 wird dabei mit Partikelmaterial zum Fertigen von beispielsweise zwei Schichten des Schichtenkörpers 5 befüllt.

Der Druckkopf 2 befindet sich in Ausgangslage bevorzugt diesseits des Körpers 8a, um mit der Austragvorrichtung 1 nicht zu kollidieren. Dann wird die Austragvorrichtung 1 vom Steuergerät angesteuert, um ausgehend von der Ausgangsposition 15 bis zur Reversierposition 16 zu verfahren, um auf diesem Weg Partikelmaterial zum Aufbau einer Schicht auszutragen (Fig.3a). Bei Erreichen der Reversierposition 16 am Rande des Baufelds 11 verschließt der Körper 8 die Austragsöffnung 14 der Austragvorrichtung 1. Anschließend wird der Druckkopf 2 vom Steuergerät angesteuert, um einen örtlich vorbestimmten Bereich der ausgetragenen Schicht mit Bindemittel zu bedrucken sowie auch die Bereiche, der die Wände 3 des Schichtenkörpers 5 bilden (Fig.3b). Danach verfährt der Druckkopf 2 wieder in seine Ausgangslage zurück.

Nachdem eine Schicht ausgetragen und selektiv bedruckt worden ist, wird die Bauplattform 6 um eine Schichthöhe oder Schichtstärke abgesenkt, damit die zur Austragsöffnung 14 weisenden Oberflächen der Körper 8 und 8a, die Austragöffnung 14 der Austragvorrichtung 1 und der Druckkopf 2 wieder um eine Schichtdicke höher als die aktuell oberste Schicht des Schichtenkörpers 5 angeordnet sind.

Dann wird die Austragvorrichtung 1 vom Steuergerät angesteuert, um von der Reversierposition 16 zur Ausgangsposition 15 zurück zu verfahren, unter Austragen von Partikelmaterial zum Aufbau einer weiteren Schicht, wie Fig.3c zeigt.

An der Ausgangsposition 15 angelangt kann für die beiden ausgetragenen Schichten eventuell nicht verbrauchtes Partikelmaterial durch die wenigstens eine Durchgangsöffnung 12 des Körpers 8a in den Auffangbehälter 7 abfließen (Fig.3d).

Danach wird der Druckkopf 2 angesteuert, damit er die Bereiche des Formkörpers 4 und der Wände 3 der ausgetragenen weiteren Schicht mit Bindemittel bedruckt. Dabei kann die entleerte Austragvorrichtung 1 vor dem Druckkopf 2 herfahren, wie Fig.3e zeigt.

Gemäß Fig.3f werden die Austragvorrichtung 1 und der Druckkopf 2 nach dem Druckvorgang wieder in ihre Ausgangsposition 15 zurück verfahren, wobei bevorzugt gleichzeitig die Bauplattform 6 um eine Schichthöhe bzw. Schichtdicke abgesenkt wird, um in vertikaler Richtung Platz für einen folgenden Schichtaufbau zu schaffen.

Nach einem erneuten Befüllen der Austragvorrichtung 1 mit Partikelmaterial in der Position gemäß Fig.3g beginnt dann der beschriebene Zyklus von Neuem und wird solange wiederholt, bis der Schichtenkörper 5 vollständig erstellt ist. Abschließend wird loses Partikelmaterial in den nicht bedruckten Bereichen vom Schichtenkörper entfernt, wobei der Formkörper 4 übrig bleibt.

Anstatt die Bauplattform 6 in vertikaler Richtung relativ zu den Körpern 8, 8a, zur Austragvorrichtung 1 und zum Druckkopf 2 mit fortschreitendem Baufortschritt abzusenken, könnten gemäß einer weiteren Ausführungsform selbstverständlich auch die Körper 8, 8a, die Austragvorrichtung 1 und der Druckkopf relativ zu einer stationären Bauplattform 6 in vertikaler Z-Richtung verfahrbar ausgebildet sein.

### Bezugszeichenliste

- 1: Austragvorrichtung
- 2: Druckkopf
- 3: Gedruckte Wandung
- 4: Formkörper
- 5: Loses Partikelmaterial
- 6: Bauplattform
- 7: Auffangbehälter
- 8: Körper
- 8a: Körper
- 9: Koordinatensystem
- 10: Koordinatenursprung
- 11: Baufeld
- 12: Durchgangsöffnung
- 13: Vorrichtung
- 14: Austragsöffnung
- 15: Ausgangsposition
- 16: Reversierposition

## Patentansprüche

1. Verfahren zum Aufbauen eines Schichtenkörpers (5) aus einer Mehrzahl von auf einer Bauplattform (6) innerhalb eines Baufelds (11) übereinanderliegenden Schichten aus fließfähigem Material, besondere aus Partikelmaterial, die in örtlich vorbestimmten Bereichen durch Einwirkung von Bindemittel verfestigt und miteinander verbunden werden, so dass von den verfestigten und verbundenen Bereichen der Schichten wenigstens ein Formkörper (4) gebildet wird, wobei über dem Baufeld (11) in wenigstens einer Austragrichtung eine Austragvorrichtung (1) mit wenigstens einer Austragsöffnung (14) hin und her bewegt wird, aus welcher während der Bewegung der Austragvorrichtung (1) das fließfähige Material in einzelnen übereinander liegenden Schichten ausgetragen wird, **dadurch gekennzeichnet, dass** wenigstens ein das Baufeld (11) in wenigstens einer Austragrichtung der Austragvorrichtung (1) begrenzender Körper (8, 8a) und die Bauplattform (6) gemäß dem jeweiligen Baufortschritt des Schichtenkörpers (5) in vertikaler Richtung relativ zueinander derart verstellt werden, dass eine zur Austragsöffnung (14) weisende Oberfläche des wenigstens einen Körpers (8, 8a) mit einer noch herzustellenden oder bereits hergestellten obersten Schicht des Schichtenkörpers (5) bündig ausgerichtet ist, um die Austragsöffnung (14) der Austragvorrichtung (1) zu verschließen und diese am Austragen von fließfähigem Material zu hindern oder um für den Schichtaufbau nicht verbrauchtes fließfähiges Material aufzufangen, wenn sich die Austragsöffnung (14) über dem wenigstens einen Körper (8, 8a) befindet.

2. Verfahren nach Anspruch 1, **dadurch gekennzeichnet, dass** der wenigstens eine Körper (8, 8a) zur variablen Begrenzung des Baufelds (11) innerhalb einer horizontalen Ebene parallel zur Bauplattform (6) verstellt wird.

3. Verfahren nach Anspruch 2, **dadurch gekennzeichnet, dass** die Austragvorrichtung (1) hinsichtlich einer vorgegebenen, sich von einer Ausgangsposition (15) an einem Rand des Baufelds (11) bis zu einer Reversierposition (16) am gegenüberliegenden Rand des Baufelds (11) erstreckenden Austragstrecke weggesteuert wird.

4. Verfahren nach Anspruch 3, **dadurch gekennzeichnet, dass** die Austragvorrichtung (1) mit einer Menge an fließfähigem Material befüllt wird, welche einem ganzzahligen Vielfachen der Menge an fließfähigem Material entspricht, welche für den Aufbau einer ganzen Schicht des Schichtenkörpers (5) benötigt wird.

5. Verfahren nach Anspruch 4, **dadurch gekennzeichnet, dass** die Reversierposition (16) der Austragvorrichtung (1) durch die jeweilige Lage des wenigstens einen Körpers (8, 8a) in der horizontalen Ebene vorgegeben wird und die Ausgangsposition (15) stationär ist.

6. Verfahren nach Anspruch 5, **gekennzeichnet durch** folgende Schritte:
a) Positionieren des wenigstens einen Körpers (8, 8a), der Austragvorrichtung (1) und der Bauplattform (6) in vertikaler Richtung relativ zueinander derart, dass zum einen die zur Austragsöffnung (14) weisende Oberfläche des wenigstens einen Körpers (8, 8a) und zum andern die Austragsöffnung (14) um eine Schichtdicke höher als die aktuell oberste Schicht des Schichtenkörpers (5) angeordnet sind,
b) Befüllen oder Nachfüllen der Austragvorrichtung (1) an der Ausgangsposition (15) mit fließfähigem Material zum Fertigen von wenigstens zwei Schichten des Schichtenkörpers (5),
c) Verfahren der Austragvorrichtung (1) ausgehend von der Ausgangsposition (15) bis zur Reversierposition (16) unter Austragen von fließfähigem Material zum Aufbau einer Schicht,
d) Versehen eines örtlich vorbestimmten Bereichs wenigstens der ausgetragenen Schicht mit Bindemittel,
e) Positionieren des wenigstens einen Körpers (8, 8a), der Austragvorrichtung (1) und der Bauplattform (6) in vertikaler Richtung relativ zueinander derart, dass zum einen die zur Austragsöffnung (14) weisende Oberfläche des wenigstens einen Körpers (8, 8a) und zum andern die Austragsöffnung (14) der Austragvorrichtung (1) um eine Schichtdicke höher als die aktuell oberste Schicht des Schichtenkörpers (5) angeordnet sind,
f) Verfahren der Austragvorrichtung (1) ausgehend von der Reversierposition (16) bis zur Ausgangsposition (15) unter Austragen von fließfähigem Material zum Aufbau einer weiteren Schicht,
g) Auffangen von eventuell nicht verbrauchtem fließfähigem Material an der Ausgangsposition (15),
h) Versehen eines örtlich vorbestimmten Bereichs der ausgetragenen weiteren Schicht mit Bindemittel,
i) Fortfahren mit den Schritten a) bis h) solange, bis der Schichtenkörper vollständig erstellt ist.

7. Verfahren nach Anspruch 3 oder 4, **dadurch gekennzeichnet, dass** die Ausgangsposition (15) durch die jeweilige Lage des wenigstens einen Körpers (8, 8a) in der horizontalen Ebene vorgegeben wird und die Reversierposition (16) stationär ist.

8. Verfahren nach Anspruch 7, **gekennzeichnet durch** folgende Schritte:
a) Positionieren des wenigstens einen Körpers (8, 8a), der Austragvorrichtung 81) und der Bauplattform (6) in vertikaler Richtung relativ zueinander derart, dass zum einen die zur Austragsöffnung (14) weisende Oberfläche des wenigstens einen Körpers (8, 8a) und zum andern die Austragsöffnung (14) der Austragvorrichtung (1) um eine Schichtdicke höher als die aktuell oberste Schicht des Schichtenkörpers (5) angeordnet sind,
b) Befüllen oder Nachfüllen der Austragvorrichtung (1) an der Ausgangsposition (15) mit fließfähigem Material zum Fertigen von wenigstens einer Schicht des Schichtenkörpers (5),
c) Verfahren der Austragvorrichtung (1) ausgehend von der Ausgangsposition (15) bis zur Reversierposition (16) unter Austragen von fließfähigem Material zum Aufbau einer Schicht,
d) Auffangen von eventuell nicht verbrauchtem fließfähigem Material an der Reversierposition (16),
e) Versehen eines örtlich vorbestimmten Bereichs der ausgetragenen Schicht mit Bindemittel,
f) Verfahren der entleerten Austragvorrichtung (1) ausgehend von der Reversierposition (16) bis zur Ausgangsposition (15),
g) Fortfahren mit den Schritten a) bis f) solange, bis der Schichtenkörper (5) vollständig erstellt ist.

9. Verfahren nach einem der Ansprüche 3 bis 8, **dadurch gekennzeichnet, dass** die Ausgangsposition (15) eine Befüllposition ist, an welcher die Austragvorrichtung (1) mit fließfähigem Material befüllt oder nachgefüllt wird.

10. Verfahren nach einem der Ansprüche 3 bis 9, **dadurch gekennzeichnet, dass** das Auffangen von überschüssigem fließfähigem Material an der Reversierposition (16) oder an der Ausgangsposition (15) erfolgt.

11. Verfahren nach einem der Ansprüche 3 bis 10, **dadurch gekennzeichnet, dass** in vertikaler Richtung die Bauplattform (6) relativ zu dem wenigstens einen Körper (8, 8a) und der Austragvorrichtung (1) und in horizontaler Richtung der wenigstens eine Körper (8, 8a) und die Austragvorrichtung (1) relativ zur Bauplattform (6) verfahren werden.

## Claims

1. A method for constructing a layered element (5) from a plurality of layers made from a flowable material that are arranged on top of each other on a construction platform (6) within a construction field (11), wherein the layers are in particular made from a particle material and solidified and connected with each other in locally predetermined portions through an impact of a binder so that the solidified and connected portions of the layers form at least one form element (4), wherein an output device (1) with at least on output opening (14) is moved back and forth above the construction field (11) in at least one output direction, wherein the flowable material is put out from the output opening in individual layers that are arranged on top of each other during the movement of the output device (1), **characterized in that** at least one body (8, 8a) defining the construction field (11) in at least one output direction of the output device (1) and the construction platform (6) are adjusted relative to each other in a vertical direction according to a respective progress of the layered element (5) so that a surface of the at least one body (8, 8a) that is oriented towards the output opening (14) is aligned flush with an upper layer of the layer element (5) which upper layer still has to be constructed or that has already been constructed in order to close the output opening (14) of the output device (1) and to prevent the output opening from putting out the flowable material or to capture a flow able material that has not been consumed for the layer construction when the output opening (14) is arranged above the at least one element (8, 8a).

2. The method according to claim 1, **characterized in that** the at least one body (8, 8a) is adjusted within a horizontal plane that is parallel to the construction platform (6) in order to variably define the construction field (11).

3. The method according to claim 2, **characterized in that** the output device (1) is distance controlled with respect to a predetermined output path extending from an output position (15) to an edge of the construction field (11) to a reversing position (18) at an opposite edge of the construction field (11).

4. The method according to claim 3, **characterized in that** the output device (1) is filled with an amount of the flowable material which corresponds to an integer multiple of an amount of the flowable material which is required for constructing an entire layer of the layer element (5).

5. The method according to claim 4, **characterized in that** the reversing position (16) of the output device (1) is predetermined by a respective position of the at least one body (8, 8a) in the horizontal plane and the starting position (15) is stationary.

6. The method according to claim 5, **characterized by** the steps:
a) positioning the at least one element (8, 8a) of the output device (1) and the construction platform (6) relative to each other in the vertical position so that on the one hand side a surface of the at least one body (8, 8a) oriented towards the output opening (14) and on the other hand side the output opening (14) are arranged higher than a currently uppermost layer of the layer element (5) by a layer thickness,
b) filling or refilling the output device (1) at the starting position (15) with a flowable material for fabricating at least two layers of the layer element (5),
c) moving the output device (1) from the starting positon (15) to the reversing position (16) while putting out the flowable material for constructing a layer,
d) providing a locally predetermined portion at least of the put out layer with the binder,
e) positioning the at least one body (8, 8a) of the output device (1) and the construction platform (6) relative to each other in a vertical direction so that on the one hand side a surface of the at least one body (8, 8a) oriented towards the output opening (14) and on the other hand side the output opening (14) of the output device (1) is arranged higher than a currently uppermost layer of the layer element (5) by a layer thickness,
f) moving the output device (1) from the reversing position (16) to the starting position (15) while putting out the flowable material for constructing an additional layer,
g) capturing possibly non-consumed flowable material at the starting position (15),
h) providing a locally predetermined portion of the put out additional layer with a binder material,
i) repeating steps a) - h) until the layer element is produced in its entirety.

7. The method according to claim 3 or 4, **characterized in that** the starting position (15) is predetermined by a respective position of the at least one body (8, 8a) in the horizontal plane and the reversing position (16) is stationary.

8. The method according to claim 7, **characterized by the steps:**
a) positioning the at least one element (8, 8a) of the output device (1) and the construction platform (6) relative to each other in the vertical position so that on the one hand side a surface of the at least one body (8, 8a) oriented towards the output opening (14) and on the other hand side the output opening (14) are arranged higher than a currently uppermost layer of the layer element (5) by a layer thickness,
b) filling or refilling the output device (1) at the starting position (15) with a flowable material for fabricating at least two layers of the layer element (5),
c) moving the output device (1) from the starting positon (15) to the reversing position (16) while putting out the flowable material for constructing a layer
d) capturing possibly non-consumed flow able material at the reversing position (16),
e) providing a locally predetermined portion at of the put out layer with the binder,
f) moving the emptied output device (1) from the reversing position (16) to the starting position (15),
g) repeating steps a) - f) until the layer element (5) is completely fabricated.

9. The method according to one of the claims 3 - 8, **characterized in that** the starting position (15) is a filling position where the output device (1) is filled or refilled with the flow able material.

10. The method according to one of the claims 3 - 9, **characterized in that** capturing superfluous flowable material is performed at the reversing position (16) or at the starting position (15).

11. The method according to one of the claims 3 - 10, **characterized in that** the construction platform (6) is moved relative to the at least one body (8a) and the output device (1) in the vertical direction and the at least body (8, 8a) and the output device (1) are moved relative to the construction platform (6) in the horizontal direction.

## Revendications

1. Dispositif (1) pour construire un corps stratifié (2) composé d'une multitude de couches en matériau fluide, en particulier en matériau en particules, superposées sur une plateforme de construction (3) à l'intérieur d'un champ de construction (11), qui sont solidifiées dans des zones prédéterminées localement par l'effet d'un liant et qui sont reliées l'une à l'autre si bien qu'au moins un corps moulé (2) est formé par les zones solidifiées et reliées des couches, cependant qu'un dispositif de déchargement (1) se déplace en va-et-vient au-dessus du champ de construction (11) dans au moins un sens de déchargement avec au moins une ouverture de déchargement (14) par laquelle le matériau fluide est déchargé pendant le déplacement du dispositif de déchargement (1) en différentes couches superposées, **caractérisé en ce qu'**au moins un corps (8, 8a) qui délimite le champ de construction (11) dans au moins un sens de déchargement du dispositif de déchargement (1) et la plateforme de construction (6) sont déplacés selon l'avancement respectif de la construction du corps stratifié (5) dans le sens vertical l'un par rapport à l'autre de telle manière qu'une surface tournée vers l'ouverture de déchargement (14) du corps qui existe au moins (8, 8a) est alignée à fleur avec une couche supérieure du corps stratifié (5) qui doit encore être fabriquée ou qui est déjà fabriquée pour fermer l'ouverture de déchargement (14) du dispositif de déchargement (1) et pour l'empêcher de décharger du matériau fluide ou pour récupérer du matériau fluide non consommé pour la construction des couches lorsque l'ouverture de déchargement (14) se trouve au-dessus du corps qui existe au moins (8, 8a).

2. Procédé selon la revendication 1, **caractérisé en ce que** le corps qui existe au moins (8, 8a) est déplacé parallèlement à la plateforme de construction (6) pour la délimitation variable du champ de construction (1) à l'intérieur d'un plan horizontal.

3. Procédé selon la revendication 2, **caractérisé en ce que** la course du dispositif de déchargement (1) est commandée pour ce qui est d'une trajectoire de déchargement prédéterminée qui s'étend d'une position de départ (15) sur un bord du champ de construction (11) jusqu'à une position d'inversion (16) sur le bord opposé du champ de construction (11).

4. Procédé selon la revendication 3, **caractérisé en ce que** le dispositif de déchargement (1) est rempli d'une quantité de matériau fluide qui correspond à un multiple entier de la quantité de matériau fluide qui est nécessaire pour la construction d'une couche entière du corps stratifié (5).

5. Procédé selon la revendication 4, **caractérisé en ce que** la position d'inversion (16) du dispositif de déchargement (1) est prédéterminée par la position respective du corps qui existe au moins (8, 8a) dans le plan horizontal et la position de départ (15) est stationnaire.

6. Procédé selon la revendication 5, **caractérisé par** les étapes suivantes :
a) Positionnement du corps qui existe au moins (8, 8a) du dispositif de déchargement (1) et de la plateforme de construction (6) dans le sens vertical l'un par rapport à l'autre de telle manière que d'une part la surface du corps qui existe au moins (8, 8a) tournée vers l'ouverture de déchargement (14) et d'autre part l'ouverture de déchargement (14) sont placées d'une épaisseur de couche plus haut que la couche actuellement la plus haute du corps stratifié (5),
b) Remplissage ou complément de remplissage du dispositif de déchargement (1) à la position de départ (15) avec du matériau fluide pour fabriquer au moins deux couches du corps stratifié (5),
c) Déplacement du dispositif de déchargement (1) en partant de la position de départ (15) jusqu'à la position d'inversion (16) en déchargeant du matériau fluide pour construire une couche,
d) Ajout de liant dans une zone prédéterminée localement d'au moins la couche déchargée,
e) Positionnement du corps qui existe au moins (8, 8a), du dispositif de déchargement (1) et de la plateforme de construction (6) dans le sens vertical l'un par rapport à l'autre de telle manière que la surface du corps qui existe au moins (8, 8a) tournée vers l'ouverture de déchargement (14) et d'autre part l'ouverture de déchargement (14) sont placées d'une épaisseur de couche plus haut que la couche actuellement la plus haute du corps stratifié (5),
f) Déplacement du dispositif de déchargement (1) en partant de la position d'inversion (16) jusqu'à la position de départ (15) en déchargeant du matériau fluide pour construire une autre couche,
g) Récupération de matériau fluide éventuellement non consommé à la position de départ (15),
h) Ajout de liant dans une zone prédéterminée localement de l'autre couche déchargée,
i) Poursuite des étapes a) à h) jusqu'à ce que le corps stratifié soit entièrement fabriqué.

7. Procédé selon la revendication 3 ou 4, **caractérisé en ce que** la position de départ (15) est prédéterminée par la position respective du corps qui existe au moins (8, 8a) dans le plan horizontal et la position d'inversion (16) est stationnaire.

8. Procédé selon la revendication 7, **caractérisé par** les étapes suivantes :
a) Positionnement du corps qui existe au moins (8, 8a) du dispositif de déchargement (1) et de la plateforme de construction (6) dans le sens vertical l'un par rapport à l'autre de telle manière que d'une part la surface du corps qui existe au moins (8, 8a) tournée vers l'ouverture de déchargement (14) et d'autre part l'ouverture de déchargement (14) du dispositif de déchargement (1) sont placées d'une épaisseur de couche plus haut que la couche actuellement la plus haute du corps stratifié (5),
b) Remplissage ou complément de remplissage du dispositif de déchargement (1) à la position de départ (15) avec du matériau fluide pour fabriquer au moins une couche du corps stratifié (5),
c) Déplacement du dispositif de déchargement (1) en partant de la position de départ (15) jusqu'à la position d'inversion (16) en déchargeant du matériau fluide pour construire une couche,
d) Récupération de matériau fluide éventuellement non consommé à la position d'inversion (16),
e) Ajout de liant dans une zone prédéterminée localement de la couche déchargée,
f) Déplacement du dispositif de déchargement vidé (1) en partant de la position d'inversion (16) jusqu'à la position de départ (15),
g) Poursuite des étapes a) à f) jusqu'à ce que le corps stratifié soit entièrement fabriqué.

9. Procédé selon l'une des revendications 3 à 8, **caractérisé en ce que** la position de départ (15) est une position de remplissage à laquelle le dispositif de déchargement (1) est rempli ou complété avec du matériau fluide.

10. Procédé selon l'une des revendications 3 à 9, **caractérisé en ce que** la récupération d'excédent de matériau fluide se fait à la position d'inversion (16) ou à la position de départ (15).

11. Procédé selon l'une des revendications 3 à 10, **caractérisé en ce que** la plateforme de construction (6) est déplacée dans le sens vertical par rapport au corps qui existe au moins (8, 8a) et au dispositif de déchargement (1) et le corps qui existe au moins (8, 8a) et le dispositif de déchargement (1) sont déplacés dans le sens horizontal par rapport à la plateforme de construction (6).
